# EUROPEAN PATENT APPLICATION

(11) **EP 4 119 931 A1**
(43) Date of publication of application: **18.01.2023**
(21) Application number: 21305990.0
(22) Date of filing: 15.07.2021
(51) Int. Cl.: G01N 21/65

(54) **ENHANCED SPECTRAL DETECTION OF A TARGET AND CORRESPONDING DETECTION SYSTEM**

(71) Applicant: GREENTROPISM, 75116 Paris (FR)
(72) Inventor: BANON, Alexandre Antoine Benjamine Marie, 75013 Paris (FR); BOULANGER, Marion, 75116 Paris (FR); BOULANGER, Anthony François Michel Claude Dieudonné, 75116 Paris (FR)
(74) Representative: Icosa

(57) **Abstract**

The invention relates to computer-implemented signature determination method (100) for determining a spectral signature corresponding to a target, the method comprising:
- based on a training dataset including at least one first spectrum of a first sample labeled as including the target and at least one second spectrum of a second sample labeled as not including the target, each first spectrum and each second spectrum being acquired over a predetermined spectral range, training (110) a model to output, for each channel of the predetermined spectral range, a corresponding relevancy score representative of a relevancy of the channel for determining the presence or the absence of the target in a non-labeled sample based on a non-labeled spectrum acquired from said non-labeled sample;
- computing (120) the spectral signature, a value of the spectral signature for each channel of the predetermined spectral range depending on the outputted relevancy score for said channel.

## Description

### FIELD OF INVENTION

The invention concerns a method for determining a spectral signature corresponding to a target.

The invention also concerns a method for detecting a target in a sample, and a corresponding detection system.

The invention applies to the field of spectroscopy, and more precisely to the detection of targets in samples based on corresponding spectra.

### BACKGROUND OF INVENTION

Spectrometry is an essential tool for detection, identification, quantification and characterization of substances, compounds or molecules. It is used in several scientific fields, such as physics, organic chemistry, assays or medicine. Spectrometry is also relied upon for applications such as quality control in industrial processes, control of mixtures, in-line cleaning or monitoring anaerobic digestion centers.

For such applications, it is known to acquire a spectrum of a sample to determine whether said sample contains a target of interest. This is mainly done by determining whether predetermined peaks, associated to the target of interest, are present in the acquired spectrum.

However, such method is not satisfactory.

Indeed, the aforementioned acquired spectra are generally very complex, and the peaks associated to the target of interest may have a magnitude that is much lower to the signal corresponding to the remaining chemical components of the sample.

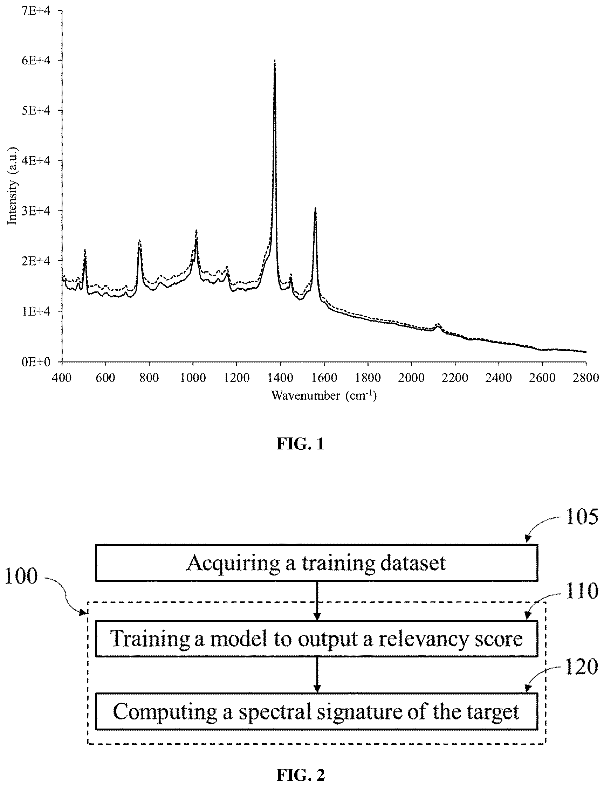

For instance, figure 1 shows two spectra corresponding, respectively, to two samples of the same growth medium, one of the samples including SARS-Cov-2 (solid line), and the other sample not including said virus (dotted line). As it appears on this figure, both spectra are very similar, and determining whether the target of interest (in this case, SARS-Cov-2) is present in the sample or not is therefore very difficult. This is, for example, detrimental for the sensitivity and the specificity (that is, the reliability) of a detection method based on the analysis of such spectra.

A purpose of the invention is therefore to provide a method for detecting the presence of a target that is more reliable, *i.e.,* having better sensitivity and/or specificity compared to known methods.

### SUMMARY

To this end, the present invention relates to a signature determination method for determining at least one spectral signature, each spectral signature corresponding to a respective target, the method being implemented using a computer and comprising, for each target:
- based on a training dataset including at least one first spectrum of a first sample labeled as including the target and at least one second spectrum of a second sample labeled as not including the target, each first spectrum and each second spectrum being acquired over a predetermined spectral range including N channels, training a model to output, for each channel of the predetermined spectral range, a corresponding relevancy score representative of a relevancy of the channel for determining the presence or the absence of the target in a non-labeled sample based on a non-labeled spectrum acquired from said non-labeled sample;
- computing the corresponding spectral signature, a value of the spectral signature for each channel of the predetermined spectral range depending on the outputted relevancy score for said channel.

Indeed, the signature determination method according to the invention allows to determine, for each target, a spectral signature that is specific to said target (as well as to the type of technology used to acquire the spectra, such as Raman, atomic, etc.), and independent from the spectrometer and the sample, *i.e.,* universal. As a result, by weighting a spectrum acquired from a sample with the spectral signature corresponding to a specific target of interest, the parts of the signal that correspond to the spectral channels that are the most relevant for determining the presence of said target of interest are enhanced. As a result, the results of a detection method performed based on such weighted spectrum are more reliable.

According to other advantageous aspects of the invention, the signature detection method includes one or more of the following features, taken alone or in any possible combination:

The signature determination method further comprises, for each target, before the step of training the model, a step of performing data reduction, preferably a step of performing principal component analysis, on the training dataset to generate a reduced dataset and a corresponding weight matrix, the reduced dataset including a plurality of reduced spectra each having n components, each component being associated to a corresponding index, and wherein, for each channel, outputting the corresponding relevancy score includes:
- computing, for each index, an intermediate relevancy score representative of a relevancy of said index for determining the presence or the absence of the target in the non-labeled sample based on the associated non-labeled spectrum;
- for each channel, computing the corresponding relevancy score based on the weight matrix and at least one determined intermediate relevancy score;

For a i^{th} channel of the predetermined spectral range, the corresponding relevancy score is equal to the i^{th} component of the matrix multiplication **Wr,** where:
- **W** is the weight matrix, the weight matrix being of size (N,n); and
- **r** is a vector of length n, a k^{th} component of **r** being equal to the intermediate relevancy score for the k^{th} index;

The spectral signature is equal to a result of at least one of: normalizing, applying an absolute value on and/or smoothing a vector **R** of length N, a k^{th} component of **R** being equal to the relevancy score associated to the k^{th} channel;

The at least one target is a pathogen, preferably one of: a bacterium, a virus, a parasite, a prion, a fungus and/or a mold, more preferably SARS-CoV-2;

The model is a relevance vector machine;

Each of the first, the second and the non-labeled spectrum is acquired using a spectrometer, preferably one of: an optical spectrometer, an atomic spectrometer or a Brillouin spectrometer;

Each of the first, the second and the non-labeled spectrum is acquired, using an optical spectrometer, by performing surface-enhanced Raman spectroscopy on the first sample, the second sample and the non-labeled sample respectively.

The invention also relates to a detection method for detecting a target in a sample, the detection method being implemented using a computer and comprising:
- acquiring a spectrum of the sample, over a predetermined spectral range including M channels;
- computing a weighted spectrum, a value of the weighted spectrum for each channel being a function of a value of the acquired spectrum for said channel and a value, for said channel, of a spectral signature associated to the target; and
- applying a detection model to a weighted input, representative of the weighted spectrum, to determine the presence or the absence of the target in the sample, the detection model being trained to detect, based on a non-labeled spectrum acquired from a non-labeled sample, the presence of the target in the non-labeled sample,
wherein the spectral signature is determined by implementing the signature determination method as defined previously.

Such detection method is advantageous, as the weighting step allows to enhance the parts of the acquired spectrum that are the most relevant for determining the presence of the target of interest, while the parts of the acquired spectrum that are less relevant are not enhanced (or are even lowered). This leads to a better sensibility and a better sensitivity in the detection of the target. This is particularly advantageous for the detection of target extracted from an *in vivo* sample, because the spectrum acquired from such a sample may be so complex that the contribution of the target to said spectrum is hidden by the contribution of the other chemical components of the sample.

According to other advantageous aspects of the invention, the detection method includes one or more of the following features, taken alone or in any possible combination:

For each channel, the value of the weighted spectrum is equal to a result of multiplying the value of the acquired spectrum for said channel by the value of the spectral signature for said channel;

The detection method further comprises, before the step of applying the detection model to the weighted input, the steps of:
- obtaining a labeled dataset representative of a reference dataset comprising at least one third spectrum of a third sample labeled as including the target and at least one fourth spectrum of a fourth sample labeled as not including the target; and
- training the detection model, based on the labeled dataset, to detect the presence of the target in the non-labeled sample based on the non-labeled spectrum acquired from said non-labeled sample;

The labeled dataset is obtained by multiplying each third spectrum and each fourth spectrum of the reference dataset by the spectral signature corresponding to the target;

The detection method further comprises, before the step of training the detection model, a step of performing data reduction, preferably a step of performing principal component analysis, on the reference dataset to generate the labeled dataset and a corresponding labeled weight matrix, the labeled dataset including a plurality of reduced spectra each having m components, and wherein a j^{th} component of the weighted input is equal to j^{th} component of the matrix multiplication **xW'^{T},** where:
- **W'** is the labeled weight matrix, the labeled weight matrix being of size (M, m);
- **W'^{T}** is the transpose of the labeled weight matrix **W';** and
- **x** is a vector of length M, a k^{th} component of **x** being equal to the k^{th} component of the weighted spectrum;

The sample is obtained from a nasopharyngeal swab.

The invention also relates a detection system for detecting a target in a sample, the detection system including a computer configured to:
- based on a spectrum acquired from the sample over a predetermined spectral range including M channels, compute a weighted spectrum, a value of the weighted spectrum for each channel being a function of a value of the acquired spectrum for said channel and a value, for said channel, of a spectral signature associated to the target; and
- apply a detection model to a weighted input, representative of the weighted spectrum, to determine the presence or the absence of the target in the sample, the detection model being trained to detect, based on a non-labeled spectrum acquired from a non-labeled sample, the presence of the target in the non-labeled sample, and
wherein, for each channel, the value of the spectral signature is representative of a relevancy of the channel for determining the presence or the absence of the target.

### BRIEF DESCRIPTION OF THE DRAWINGS

The invention will be better understood with the attached figures, in which:
**Figure 1** is a graph showing, over a same spectral range, a spectrum of a first sample including SARS-CoV-2 (solid line) and of a second sample not including SARS-CoV-2 (dotted line);
**Figure 2** is a flowchart of a first embodiment of a signature determination method according the invention;
**Figure 3** is a graph showing the spectral signature associated to SARS-CoV-2 determined by implementing the signature detection method of figure 2;
**Figure 4** is a flowchart of a second first embodiment of the signature determination method according to the invention;
**Figure 5** is a flowchart of a first embodiment of a detection method according to the invention;
**Figure 6** is a graph showing receiver operating characteristic curve of a detection method for detecting according to the invention, the target being SARS-CoV-2; and
**Figure 7** is a flowchart of a second embodiment of the detection method according to the invention.

### DETAILED DESCRIPTION

A signature determination method 100 according to the invention is shown on figure 2. Such signature determination method 100 aims at determining at least one spectral signature, each being associated to a respective target. More precisely, each spectral signature is representative of the presence of the respective target, for instance in a sample being analyzed, as will be shown later. The signature determination method 100 is performed using a computer.

According to the present invention, the expression "computer" should not be construed to be restricted to hardware capable of executing software, and refers in a general way to a processing device, which can for example include a microprocessor, an integrated circuit, or a programmable logic device (PLD). The computer may also encompass one or more Graphics Processing Units (GPU) or Tensor Processing Units (TPU), whether exploited for computer graphics and image processing or other functions. Additionally, the instructions and/or data enabling to perform associated and/or resulting functionalities may be stored on any processor-readable medium such as, e.g., an integrated circuit, a hard disk, a CD (Compact Disc), an optical disc such as a DVD (Digital Versatile Disc), a RAM (Random-Access Memory) or a ROM (Read-Only Memory). Instructions may be notably stored in hardware, software, firmware or in any combination thereof.

The target may be a pathogen. In this case, the target is preferably one of: a bacterium, a virus, a parasite, a prion, a fungus and/or a mold. For instance, the target is SARS-CoV-2 or H1N1.

Alternatively, the target may be a chemical compound or a group of chemical compounds. For instance, in the case of wine identification, the target may be specific to a grape variety and/or a geographic area.

The signature determination method 100 comprises, for each target, a training step 110 for training a model, and a computation step 120 for computing the spectral signature corresponding to said target. Said computation step 120 is performed based on results provided by the training step 110, as will be described hereinafter.

More precisely, for each target, the training step 110 comprises training the aforementioned model, based on a training dataset, to output, for each channel of a predetermined spectral range, a corresponding relevancy score. For each channel, the corresponding relevancy score is representative of a relevancy of said channel for determining the presence or the absence of the target in a non-labeled sample based on a non-labeled spectrum acquired from said non-labeled sample.

For instance, the training of the model is based on cross-validation. Moreover, during training, evaluation of the classification performed by the model is, for instance, based on accuracy.

The relevancy scores output by the model may be represented as a vector **R** of length N, N being an integer equal to the number of channels within the predetermined spectral range. For instance, the j^{th} component of **R** is the relevancy score for the j^{th} channel of the predetermined spectral range. The length N depends on the training dataset.

Preferably, the model is a relevance vector machine. This is advantageous, because the relevance vector machine is a model that provides parsimonious solutions allowing for regression and probabilistic classification. Moreover, the relevance vector machine provides robust predictions in a short time, when compared to other relevance models such as, for example, the relevance support machine.

The aforementioned training dataset includes at least one first spectrum and at least one second spectrum: each first spectrum is acquired from an associated first sample labeled as including the target, and each second spectrum is acquired from an associated second sample labeled as not including the target. Moreover, each first spectrum and each second spectrum is acquired over the predetermined spectral range. The training dataset is acquired prior to the training step 110, for instance during an acquisition step 105.

Each of the first spectrum and the second spectrum is acquired using a spectrometer, preferably one of: an optical spectrometer, an atomic spectrometer or a Brillouin spectrometer. Using an optical spectrometer is advantageous, such technology being generally more affordable.

Even more preferably, each first spectrum and each second spectrum are acquired, using an optical spectrometer, by performing surface-enhanced Raman spectroscopy (SERS) on the corresponding first sample and the second sample respectively.

Performing SERS is advantageous, because SERS allows for a short acquisition duration (typically a few seconds to a few minutes). Indeed, surface-enhanced Raman spectroscopy, especially based on nanostructured substrates or substrates containing metallic nanoparticles, highly enhances the Raman scattering signal collected from a sample (typically by several orders of magnitude). Therefore, for a given signal-to-noise ratio, the acquisition duration is reduced compared to conventional Raman spectroscopy.

After the training step, and for each target, the computation step 120 is performed to compute the respective spectral signature. Each spectral signature is computed on at least part of the predetermined spectral range.

As stated previously, the spectral signature depends on the relevancy scores output when the training step 110 is performed. More precisely, for each channel of said at least part of the predetermined spectral range, a corresponding value of the spectral signature depends on the outputted relevancy score for said channel.

For example, the spectral signature is equal to the aforementioned vector **R** of the relevancy scores. Alternatively, the spectral signature is equal to a result of at least one of: normalizing, applying an absolute value on and/or smoothing the vector **R.** Advantageously, these operations provide a spectral signature which is less dependent on the trained model.

For instance, smoothing is performed using a Savitzky-Golay filter. Such filter is quite versatile, which is advantageous.

As a result, the spectral signature associated to a given target is determined.

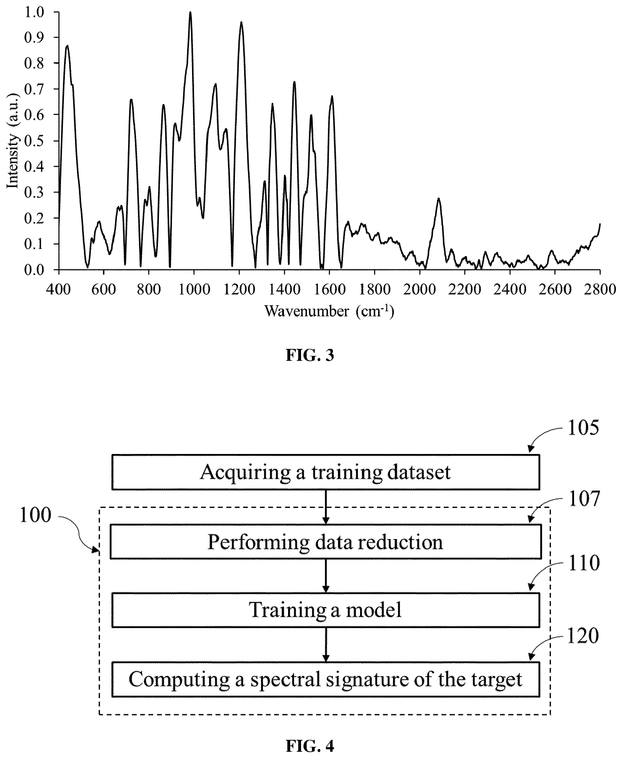

As an example, the spectral signature corresponding to SARS-CoV-2 is shown on figure 3. In this example, the spectral signature is equal to a result of normalizing, applying an absolute value on and smoothing the vector **R** provided by the trained model. It appears, on this example, that the most relevant channels for determining the presence or the absence of a target (in this case, SARS-Cov-2) do not necessarily correspond to the peaks in the spectral response of the sample that appear on figure 1. Nevertheless, some features (such as peaks) of the spectral signature can be related to specific chemical bonds or chemical groups within the target.

In a second embodiment, shown on figure 4, the signature determination method 100 further comprises, before the training step 110, a data reduction step 107 for reducing the dimensionality of the training dataset. This is done by applying a dimensionality reduction method to the training dataset. This is advantageous because dimensionality reduction reduces the size of the training dataset, which entails a reduced computation time during the training step 110.

For example, the dimensionality reduction method may be one of: independent component analysis (ICA), singular value decomposition (SVD), positive matrix factorization (PMF), factor analysis, kernel principal component analysis, wavelet transform, etc. Preferably, the data reduction step 107 is a step of performing principal component analysis on the training dataset corresponding to at least one target.

More precisely, during the data reduction step 107, dimensionality reduction, preferably principal component analysis, is performed on the aforementioned training dataset to generate a reduced dataset, as well as a corresponding weight matrix **W.** The reduced dataset is representative of the training dataset and includes a plurality of reduced spectra each having n components (n being a positive integer lower than N), each component being associated to a corresponding index. Accordingly, the weight matrix **W** is of size (N,n).

In this case, the training step 110 comprises training the model, based on the reduced dataset, to output, for each index, a corresponding intermediate relevancy score representative of a relevancy of said index for determining the presence or the absence of the target in a non-labeled sample, based on a non-labeled spectrum acquired from said non-labeled sample.

The intermediate relevancy scores may be represented as a vector **r** of length n, a k^{th} component of **r** being equal to the intermediate relevancy score for the k^{th} index.

In this case, during the training step 110, the relevancy scores (which are used for computing the spectral signature, as mentioned previously), are then computed, for each channel of the predetermined spectral range, based on the weight matrix and at least one intermediate relevancy score.

For example, for an i^{th} channel of the predetermined spectral range, the corresponding relevancy score is equal to the i^{th} component of the result of the matrix multiplication **Wr.**

As stated previously, the spectral signature is computed depending on the values of the relevancy score. The resulting spectral signature is similar to that obtained without performing the data reduction step 107.

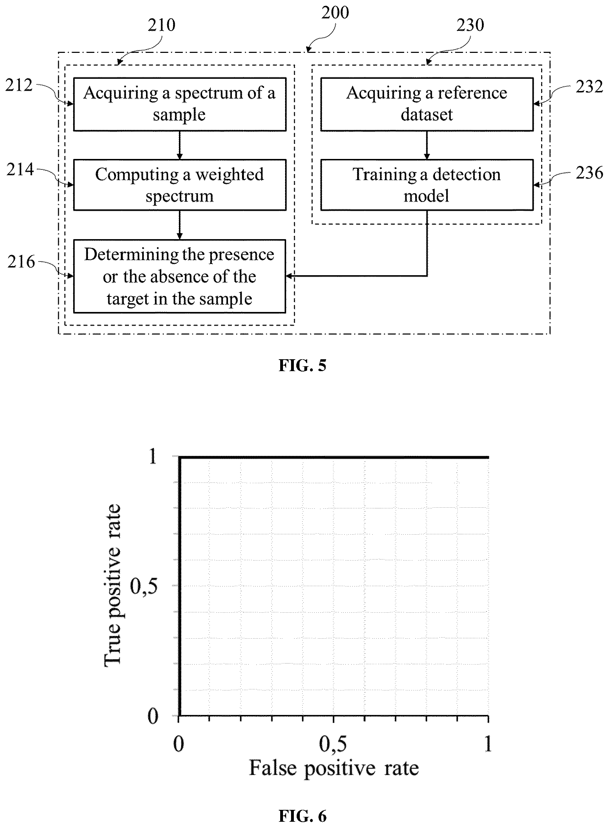

Additionally, the invention also relates to a detection method 200 (figure 5) that aims at detecting a specific target in a non-labeled sample, using the spectral signature corresponding to said target.

For example, in the case where the target of interest is SARS-Cov-2, the sample is obtained from a nasopharyngeal swab.

The detection method 200, which is performed using a computer, will now be disclosed. As will be shown below, a spectrometer may also be used.

The detection method 200 comprises a detection phase 210 and an optional configuration phase 230.

The detection phase 210 comprises an acquisition step 212 for acquiring a spectrum of the sample, a weighting step 214 for computing a weighted spectrum, and a detection step 216 for to determining the presence or the absence of the target in the sample. Said weighting step 214 is performed based on the acquired spectrum. Moreover, said detection step 216 is performed based on the weighted spectrum, as will be shown later.

During the acquisition step 212, a spectrum is acquired from the sample. The sample may or may not include a given target of interest.

The spectrum is acquired using a spectrometer over a predetermined spectral range including M channels. Preferably, the spectrum is acquired using one of: an optical spectrometer, an atomic spectrometer or a Brillouin spectrometer. Even more preferably, the spectrum is acquired using an optical spectrometer, by performing SERS on the sample.

Then, during the weighting step 214, the spectrum acquired during the acquisition step 212 is weighted using the spectral signature corresponding to the target of interest. Said spectral signature is preferably determined by implementing the signature determination method 100 as described above.

Such weighting is advantageous, as it allows enhancing the parts of the acquired spectrum that are most relevant for determining the presence of the target of interest, while the parts of the acquired spectrum that are less relevant are not enhanced (or are even lowered). This leads to a better sensibility and a better sensitivity in the detection of the target.

For example, the receiver operating characteristic curve of the detection method 200 when performed with a model trained to detect SARS-CoV-2 is shown on figure 6. As it can be seen from this figure, the detection method according to the invention has a sensitivity and a specificity of 100%, which is a result that had never been achieved with conventional detection methods.

More precisely, for each channel, the value of the weighted spectrum is a function of a value of the acquired spectrum for said channel and a value of the spectral signature associated to the target of interest.

Preferably, for each channel, the value of the weighted spectrum is equal to a result of multiplying the value of the acquired spectrum for said channel by the value of the spectral signature corresponding to said channel.

The weighted spectrum may be represented as a vector **x** of length M, a k^{th} component of vector **x** being equal to the value of the weighted spectrum for the k^{th} channel.

For example, if the acquired spectrum and the spectral signature are defined over the same predetermined spectral range including M channels, the value of the weighted spectrum for an i^{th} channel is equal to a result of multiplying the value of the acquired spectrum for the i^{th} channel by the value of the spectral signature for the i^{th} channel.

Alternatively, if the acquired spectrum and the spectral signature are not acquired over the same spectral range, the value of the weighted spectrum for the i^{th} channel is equal to a result of multiplying the value of the acquired spectrum for the i^{th} channel by either a value of the spectral signature interpolated to the i^{th} channel or the value of the spectral signature for the channel which is the closest to the i^{th} channel.

Such interpolation may be performed by using one of several known interpolation methods (such as linear approximation, interpolation with a spline function, and so on) based on the values of the spectral signature for the channels which are the closest to said i^{th} channel (*i.e.,* the channels which are associated to frequency ranges that are the closest to the frequency range associated to the aforementioned i^{th} channel).

Then, during the detection step 216, a detection model is applied to a weighted input, representative of the weighted spectrum, to determine whether the target is present in the sample or not. Preferably, the detection model is a binary classifier configured to determine, from the weighted input, if the target is present or absent in the sample.

For instance, the weighted input is equal to the weighted spectrum. Alternatively, as will be shown later, the weighted input is computed based on the weighted spectrum.

As a result, the presence or the absence of the target of interest in the sample is determined.

The configuration phase 230, which is a phase for configuring the detection model, will now be described.

As mentioned previously, the detection model is associated to at least one target (for instance, to one respective target) and is trained to detect the presence of the target in a non-labeled sample based on a non-labeled spectrum acquired from said non-labeled sample.

The configuration phase 230 includes a reference dataset acquisition step 232 for acquiring a reference dataset, and a detection model training step 236 for training the detection model based on the acquired reference dataset.

More precisely, during the reference dataset acquisition step 232, the reference dataset is acquired as follows. At least two samples are provided: at least one third sample including the target and at least one fourth sample not including the target. For each of the third sample and the fourth sample, a third spectrum and a fourth spectrum is acquired, respectively, over a predetermined spectral range including M channels. The at least one third spectrum is labeled as including the target, while the at least one fourth spectrum is labeled as not including the target.

Preferably, each third spectrum and each fourth spectrum is acquired using one of: an optical spectrometer, an atomic spectrometer or a Brillouin spectrometer. Even more preferably, each third spectrum and each fourth spectrum is acquired using an optical spectrometer, by performing SERS on the respective one of the at least one third sample and the at least one fourth sample.

Then, during detection model training step 236, the detection model is trained based on a labeled dataset, representative of the reference dataset, to detect the presence of the target in a non-labeled sample based on a non-labeled spectrum acquired from said non-labeled sample.

For example, the labeled dataset comprises the reference dataset, or is identical to the reference dataset.

Advantageously, the labeled dataset is obtained by weighting each third spectrum and each fourth spectrum of the reference dataset by the spectral signature corresponding to the target of interest, in a way similar to that disclosed with reference to the weighting step 214. For instance, the labeled dataset is obtained by multiplying each third spectrum and each fourth spectrum of the reference dataset by the spectral signature corresponding to the target of interest. This is advantageous because the values of the third and fourth spectra that are most relevant channels for determining the presence of the target are enhanced, which further enhances the discrimination abilities of the detection model during its training.

This is particularly advantageous when the spectra (either labeled or non-labeled) are acquired using SERS with native nanoparticles (i.e., non-functionalized nanoparticles), as disclosed in document PCT/FR2021/050751. Indeed, contrary to functionalized nanoparticles, native nanoparticles are not specific to a target. Therefore, SERS with native nanoparticles leads to the amplification of the Raman scattering signal for all the chemical compounds in a sample. This results in a very complex signal that may not be optimal for training the detection model. Weighting the third and/or fourth spectrum, as disclosed above, allows to mitigate the detrimental effects of such complexity.

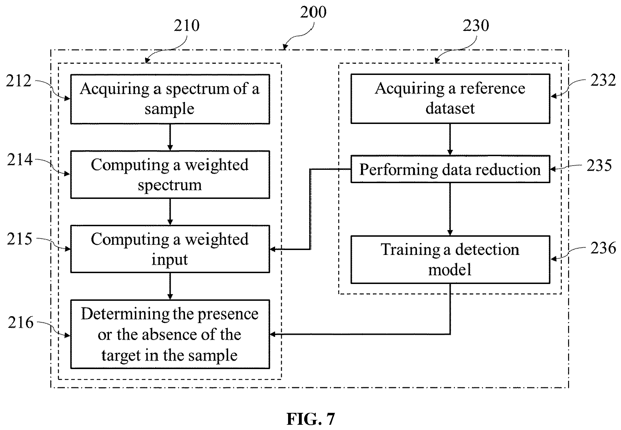

Optionally, as shown in figure 7, the configuration phase 230 comprises, before the detection model training step 236, a reference dataset reduction step 235.

More precisely, during the reference dataset reduction step 235, dimensionality reduction, such as principal component analysis, is performed on the reference dataset acquired during the reference dataset acquisition step 232, in order to generate the labeled dataset, as well as corresponding labeled weight matrix **W'**. This is advantageous because dimensionality reduction (for instance principal component analysis) reduces the size of the labeled dataset, which results in a reduced computation time during the detection model training step 236.

The resulting labeled dataset is representative of the reference dataset and includes a plurality of reduced spectra each having m components (m being a positive integer lower than M), each component being associated to a corresponding index. Accordingly, the labeled weight matrix **W'** is of size (M,m).

In this case, during a weighted input computation step 215 performed before the detection step 216, the weighted input processed during the detection step 216 is computed based on the labeled weight matrix **W'** and the weighted spectrum x computed during the weighting step 214. More precisely, for a j^{th} index, the corresponding value of the weighted input is equal to the j^{th} component of the matrix multiplication **xW'^{T}**, where **W'^{T}** is the transpose of the labeled weight matrix **W'**.

## Claims

1. A signature determination method (100) for determining at least one spectral signature, each spectral signature corresponding to a respective target, the method being implemented using a computer and comprising, for each target:
- based on a training dataset including at least one first spectrum of a first sample labeled as including the target and at least one second spectrum of a second sample labeled as not including the target, each first spectrum and each second spectrum being acquired over a predetermined spectral range including N channels, training (110) a model to output, for each channel of the predetermined spectral range, a corresponding relevancy score representative of a relevancy of the channel for determining the presence or the absence of the target in a non-labeled sample based on a non-labeled spectrum acquired from said non-labeled sample;
- computing (120) the corresponding spectral signature, a value of the spectral signature for each channel of the predetermined spectral range depending on the outputted relevancy score for said channel.

2. The signature determination method (100) according to claim **1,** further comprising, for each target, before the step (110) of training the model, a step (107) of performing data reduction, preferably a step of performing principal component analysis, on the training dataset to generate a reduced dataset and a corresponding weight matrix, the reduced dataset including a plurality of reduced spectra each having n components, each component being associated to a corresponding index, and wherein, for each channel, outputting the corresponding relevancy score includes:
- computing, for each index, an intermediate relevancy score representative of a relevancy of said index for determining the presence or the absence of the target in the non-labeled sample based on the associated non-labeled spectrum;
- for each channel, computing the corresponding relevancy score based on the weight matrix and at least one determined intermediate relevancy score.

3. The signature determination method (100) according to claim **2,** wherein, for a i^{th} channel of the predetermined spectral range, the corresponding relevancy score is equal to the i^{th} component of the matrix multiplication **Wr,** where:
- **W** is the weight matrix, the weight matrix being of size (N,n); and
- **r** is a vector of length n, a k^{th} component of **r** being equal to the intermediate relevancy score for the k^{th} index.

4. The signature determination method (100) according to any one of claims **1** to **3,** wherein the spectral signature is equal to a result of at least one of: normalizing, applying an absolute value on and/or smoothing a vector **R** of length N, a k^{th} component of **R** being equal to the relevancy score associated to the k^{th} channel.

5. The signature determination method (100) according to any one of claims **1** to **4,** wherein the at least one target is a pathogen, preferably one of: a bacterium, a virus, a parasite, a prion, a fungus and/or a mold, more preferably SARS-CoV-2.

6. The signature determination method (100) according to any one of claims **1** to **5,** wherein the model is a relevance vector machine.

7. The signature determination method (100) according to any one of claims **1** to **6,** wherein each of the first, the second and the non-labeled spectrum is acquired using a spectrometer, preferably one of: an optical spectrometer, an atomic spectrometer or a Brillouin spectrometer.

8. The signature determination method (100) according to claim **7,** wherein each of the first, the second and the non-labeled spectrum is acquired, using an optical spectrometer, by performing surface-enhanced Raman spectroscopy on the first sample, the second sample and the non-labeled sample respectively.

9. A detection method (200) for detecting a target in a sample, the detection method being implemented using a computer and comprising:
- acquiring a spectrum of the sample (212), over a predetermined spectral range including M channels;
- computing a weighted spectrum (214), a value of the weighted spectrum for each channel being a function of a value of the acquired spectrum for said channel and a value, for said channel, of a spectral signature associated to the target; and
- applying a detection model (216) to a weighted input, representative of the weighted spectrum, to determine the presence or the absence of the target in the sample, the detection model being trained to detect, based on a non-labeled spectrum acquired from a non-labeled sample, the presence of the target in the non-labeled sample, and
wherein the spectral signature is determined by implementing the signature determination method according to any one of claims **1** to **8.**

10. The detection method (200) according to claim **9,** wherein, for each channel, the value of the weighted spectrum is equal to a result of multiplying the value of the acquired spectrum for said channel by the value of the spectral signature corresponding to said channel.

11. The detection method (200) according to claim **9** or **10,** further comprising, before the step of applying the detection model (216) to the weighted input, the steps of:
- obtaining a labeled dataset representative of a reference dataset comprising at least one third spectrum of a third sample labeled as including the target and at least one fourth spectrum of a fourth sample labeled as not including the target; and
- training the detection model (236), based on the labeled dataset, to detect the presence of the target in the non-labeled sample based on the non-labeled spectrum acquired from said non-labeled sample.

12. The detection method (200) according to claim **11,** wherein the labeled dataset is obtained by multiplying each third spectrum and each fourth spectrum of the reference dataset by the spectral signature corresponding to the target.

13. The detection method (200) according to claim **11** or **12,** further comprising, before the step of training the detection model, a step (235) of performing data reduction, preferably a step of performing principal component analysis, on the reference dataset to generate the labeled dataset and a corresponding labeled weight matrix, the labeled dataset including a plurality of reduced spectra each having m components, and wherein a j^{th} component of the weighted input is equal to j^{th} component of the matrix multiplication **xW'^{T}**, where:
- **W'** is the labeled weight matrix, the labeled weight matrix being of size (M, m);
- **W'^{T}** is the transpose of the labeled weight matrix **W';** and
- **x** is a vector of length M, a k^{th} component of **x** being equal to the k^{th} component of the weighted spectrum.

14. The detection method (200) according to any one of claims **9** to **13,** wherein the sample is obtained from a nasopharyngeal swab.

15. A detection system for detecting a target in a sample, the detection system including a computer configured to:
- based on a spectrum acquired from the sample over a predetermined spectral range including M channels, compute a weighted spectrum, a value of the weighted spectrum for each channel being a function of a value of the acquired spectrum for said channel and a value, for said channel, of a spectral signature associated to the target; and
- apply a detection model to a weighted input, representative of the weighted spectrum, to determine the presence or the absence of the target in the sample, the detection model being trained to detect, based on a non-labeled spectrum acquired from a non-labeled sample, the presence of the target in the non-labeled sample, and
wherein, for each channel, the value of the spectral signature is representative of a relevancy of the channel for determining the presence or the absence of the target.
